# EUROPÄISCHE PATENTSCHRIFT

(11) **EP 2 046 508 B1**
(45) Veröffentlichungstag und Bekanntmachung des Hinweises auf die Patenterteilung: **02.11.2011**
(21) Anmeldenummer: 07801173.1
(22) Anmeldetag: 26.07.2007
(51) Int. Cl.: B08B 1/04, A46B 13/04, A47L 11/38, F24J 2/46

(54) **REINIGUNGSVORRICHTUNG FÜR PHOTOVOLTAIK-, SOLARANLAGEN UND /ODER DACHFLÄCHEN**
CLEANING APPARATUS FOR PHOTOVOLTAIC SOLAR INSTALLATIONS AND/OR ROOF AREAS
ÉQUIPEMENT DE NETTOYAGE POUR INSTALLATIONS SOLAIRES PHOTOVOLTAIQUES ET/OU SURFACES DE TOITURE

(30) Priorität: 29.07.2006 DE 202006011627 U; 26.01.2007 DE 202007001488 U
(43) Veröffentlichungstag der Anmeldung: 15.04.2009
(73) Patentinhaber: Hettinger, Gerd, 74538 Rosengarten-Rieden (DE)
(72) Erfinder: Hettinger, Gerd, 74538 Rosengarten-Rieden (DE)
(74) Vertreter: Clemens, Gerhard
(86) Internationale Anmeldenummer: PCT/DE2007/001331
(87) Internationale Veröffentlichungsnummer: WO 2008/014760

(56) Entgegenhaltungen:
- EP-A- 0 755 835
- WO-A-99/33388
- DE-A1- 19 838 072
- DE-A1-102004 049 169
- JP-A- 2004 186 632
- US-A- 5 794 298
- US-A1- 2002 032 942

## Beschreibung

### TECHNISCHES GEBIET

Die vorliegende Erfindung betrifft eine Reinigungsvorrichtung geeignet für Photovoltaik-, Solaranlagen oder Dachflächen mit einer Reinigungseinrichtung mit zumindest einer um eine Achse drehbar antreibbare Bürsteneinheit, einer an die Reinigungseinrichtung lösbar angeschlossenen Gestängeeinrichtung, die in ihrer jeweiligen Länge einstellbar ist und einer ersten Leitungseinrichtung, über die der Reinigungseinrichtung Reinigungs-oder Spülflüssigkeit zuführbar ist, wobei die Bürsteneinheit über ein in der Reinigungseinrichtung angeordnetes erstes Aggregat, nämlich Elektromotor, antreibbar ist, das erste Aggregat über einen in der Reinigungseinrichtung angeordneten ersten Akkumulator mit elektrischer Energie versorgt wird, das erste Aggregat über eine Fernsteuerung ansteuerbar ist, die Bürsteneinheit als zumindest eine um eine Längsachse rotierbare Längsbürste ausgebildet ist und die Reinigungseinrichtung auf Rollen oder Rädern gelagert ist.

### STAND DER TECHNIK

Bei Photovoltaik- und Solaranlagen und auch bei Dächern besteht das Problem, dass diese aufgrund des permanenten Witterungs- und Umwelteinflusses im Laufe der Zeit mehr oder minder starke Verschmutzungen aufweisen. Aufgrund dieser Verschmutzungen lässt bei den Photovoltaik-und Solaranlagen die Leistung beziehungsweise der Wirkungsrad sehr stark nach, so dass eine Reinigung unabdingbar ist, um den wirtschaftlichen Einsatz derartiger Anlagen dauerhaft zu gewährleisten. Aufgrund der schweren Zugänglichkeit derartiger Anlagen ist eine herkömmliche Reinigung sehr kostenintensiv, da meist eine Hebebühne und Reinigungspersonal benötigt wird.

In der DE 198 38 072 A1 ist eine Reinigungsvorrichtung für Fenster-, Dach- und Fassadenflächen der eingangs genannten Art beschrieben. Die Reinigungsvorrichtung enthält einen Reinigungskopf mit einer senkrecht zur Reinigungsfläche rotierenden Reinigungsbürste und einer Pumpeneinrichtung, die dem Reinigungskopf innerhalb der Reinigungsvorrichtung Reinigungsflüssigkeit zuführt. Dabei ist eine Saugeinrichtung vorhanden, die die Reinigungsflüssigkeit wieder absaugt. Der Wasserbehälter, die Pumpeneinrichtung und die Saugeinrichtung sind in einem Rucksack untergebracht, den die Bedienungsperson beim Reinigungsvorgang trägt.

In der DE 10 2004 049 169 A1 ist ein Dachrinnenreinigungsgerät beschrieben, das eine tragbare Haltestange aufweist, das ein an einem Ende der Haltestange angeordnetes Reinigungswerkzeug aufweist, das in einer Dachrinne eingesetzt werden kann.

Das Gebrauchsmuster DE 93 06 679.1 beschreibt eine Vorrichtung zur Reinigung von glatten Oberflächen, bei der zwei mechanisch angetriebene Cassettenwalzen eingesetzt werden, die über eine Abstreifleiste laufen, um den gelösten Schmutz abzustreifen.

In der DE 168951 ist eine Vorrichtung zum Reinigen von Fensterscheiben und dergleichen beschrieben, die sich dadurch auszeichnet, dass an einer Zuführungsstange ein Motor angebracht wird, der eine rotierende oder hin- und hergehende Bewegung zur Reinigung der Fensterscheiben durch den Reinigungskopf ermöglicht.

In der EP-A-0 755 835 ist eine Vorrichtung zum Waschen von Fenstern, gemäß dem Oberbegriff des Anspruchs 1 offenbart. Dabei kommt eine Gestängeeinrichtung zum Einsatz an deren vorderseitem Ende eine Bürsteneinheit angeordnet ist, die von einem seitlich neben der Bürsteneinheit angeordneten Elektromotor angetrieben wird. Der Elektromotor wird über eine an dem Gestänge verlaufende elektrische Leitung mit elektrischer Energie versorgt. Über eine an der Gestängeeinrichtung vorhandene Wasserleitung wird von einem Tank Wasser der Bürsteneinheit zugeführt. Über eine Handhabe wird die Menge des zugeführten Wassers gesteuert.

Die WO 99/33388 A offenbar eine Vorrichtung zur Reinigung von Fassaden. Eine Reinigungseinrichtung weist hierzu ein über ein Getriebe an einer Bürsteneinheit angeschlossenes elektrisches Aggregat auf, wobei die Reinigungseinrichtung am Ende einer Gestängeeinrichtung vorhanden ist. Über eine separate Stromleitung wird das elektrische Aggregat mit elektrischer Energie versorgt. Über an der Gestängeeinrichtung gelagerte Rohrleitungs-einrichtungen wird der Bürsteneinheit Spülwasser zugeführt. Des Weiteren sind an der Reinigungseinrichtung Absaugrohrleitungen angeschlossen, die wiederum an eine Absaugeinheit angeschlossen sind.

Die US-A-5,794,298 offenbart eine auf einem Lastkraftwagen montierte Reinigungsvorrichtung mit Bürsteneinheiten zum Reinigen von großen Objekten wie beispielsweise Flugzeuge, Schiffe oder Gebäude. Die Reinigungsvorrichtung weist hierbei einen Auslegerarm auf, der mehrere, gelenkig miteinander verbundene Gestängestäbe aufweist, die über hydraulische Kolbenzylinderaggregate in gewünschte Drehpositionen bringbar sind. Durch diesen Lenkmechanismus ist es möglich, die Bürsteneinheiten immer so auszurichten, dass sie senkrecht zu der zu reinigenden Fläche ausgerichtet sind.

### DARSTELLUNG DER ERFINDUNG

Ausgehend von dem genannten Stand der Technik liegt der vorliegenden Erfindung das technische Problem beziehungsweise die Aufgabe zugrunde, eine Reinigungsvorrichtung anzugeben, die eine einfache und effektive Reinigung von Photovoltaik-, Solaranlagen sowie Dächern ermöglicht, ohne das kostenintensive Hebebühnen und zusätzliches Reinigungspersonal benötigt wird und die darüber hinaus geeignet ist, Schnee von derartigen Flächen abzuräumen.

Die erfindungsgemäße Reinigungsvorrichtung ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Reinigungsvorrichtung geeignet für Photovoltaik-, Solaranlagen oder Dachflächen der eingangs genannten Art ist durch den kennzeichnenden Teil des ersten Anspruchs charakterisiert.

Dadurch, dass die Gestängeeinrichtung in ihrer jeweiligen Länge einstellbar ist, kann die Reinigungsvorrichtung mit einer Bedienperson Dachflächen und auch auf den Dachflächen angeordnete Photovoltaik- und Solaranlagen vom Boden aus oder gegebenenfalls von einer Leiter problemlos erreichen und reinigen, ohne dass eine Hebebühne eingesetzt werden muss. Die Gewichtskraft der Vorrichtung erzeugt einen ausreichenden Druck auf die zu reinigende Fläche, um eine optimale Reinigung zu gewährleisten. Die rotierenden Längsbürsten ermöglichen eine einfache Führung auch bei großen Längen der Gestängeeinrichtung.

In besonders vorteilhafter Art und Weise ist das erste Aggregat über eine Fernsteuerung ansteuerbar, so dass elektrische Energie nur dann verbraucht wird, wenn auch tatsächlich ein Reinigungsvorgang erfolgt.

Um eine Unabhängigkeit von Stromnetzen zu gewährleisten, zeichnet sich die Vorrichtung weiterhin dadurch aus, dass das erste Aggregat über einen in der Reinigungseinrichtung angeordneten ersten Akkumulator mit elektrischer Energie versorgt wird.

Zur optimalen Handhabung der Reinigungsvorrichtung während des Reinigungsvorgangs ist die Reinigungseinrichtung selbst auf Rollen, insbesondere schwenkbaren Rollen, gelagert.

Eine bevorzugte Ausgestaltung der Gestängeeinrichtung zeichnet sich dadurch aus, dass mehrere lösbar miteinander verbundene Gestängeeinheiten vorhanden sind, die insbesondere mittels Rast-, Clips-, Steck- oder Schraubverbindungen lösbar miteinander verbindbar sind.

Die erfindungsgemäße Reinigungsvorrichtung zeichnet sich weiterhin dadurch aus, dass die erste Leitungseinrichtung mit einem Reinigungsmittelbehälter in Kommunikationsverbindung steht, an dem eine Pumpeinheit angeordnet ist, die den Transport des Reinigungsmittels beziehungsweise Reinigungsflüssigkeit über die erste Leitungseinrichtung hin zur Reinigungseinrichtung gewährleistet. Die Pumpeinheit kann dabei entweder im Falle ihrer elektrischen Ausbildung über einen zweiten Akkumulator betrieben werden oder über ein direkt an ein Stromnetz angeschlossenes Kabel mit elektrischer Energie versorgt werden.

In der praktischen Handhabung ist es besonders vorteilhaft, die Leitungseinrichtung als flexible Schlaucheinrichtung auszubilden.

Eine besonders vorteilhafte Weiterbildung zeichnet sich dadurch, dass die Leitungseinrichtung lösbar an der Gestängeeinrichtung befestigbar sind, wobei die Gestängeeinrichtung zu diesem Zweck bevorzugt Führungsmuffen aufweist.

Um das Einsatzgebiet der erfindungsgemäßen Reinigungsvorrichtung zu erweitern, zeichnet sich eine besonders bevorzugte Ausgestaltung dadurch aus, dass die Reinigungseinrichtung gegen einen Adapter austauschbar ist, an dem beispielsweise durch handelsübliche Verschraubungen weitere Reinigungsgeräte wie beispielsweise Besen, Trockengummi oder dergleichen an die Gestängeeinrichtung angeschlossen werden kann, so dass beispielsweise die Anlagen oder Dächer von Schnee problemlos gereinigt werden können.

Eine besonders bevorzugte Ausgestaltung der erfindungsgemäßen Reinigungsvorrichtung zeichnet sich dadurch aus, dass die einstellbare Länge der Gestängeeinrichtung so groß wählbar ist, dass die Dachfläche eines zumindest einstöckigen Gebäudes vom Boden aus mit der Reinigungseinrichtung erreichbar ist, wobei die Praxis gezeigt hat, dass eine maximale Länge von 5 bis 30 m, insbesondere im Einfamilienhausbereich, sich als ausreichend herausgestellt hat.

Die Gestängeeinrichtung besteht aus hochfestem leichtem Material, wie beispielsweise Aluminium oder Karbon.

Um den Reinigungsvorgang zu überprüfen, zeichnet sich eine besonders vorteilhafte Weiterbildung der erfindungsgemäßen Reinigungsvorrichtung dadurch aus, dass an der Reinigungseinrichtung eine Kamera angeordnet ist, die ihre Signale an einen von einer Bedienperson einsehbaren Monitor abgibt.

Die Bürsteneinheit kann gemäß einer vorteilhaften Ausgestaltung austauschbar an der Reinigungseinrichtung vorhanden sein, so dass unterschiedliche Einsatzgebiete (Schmutzreinigung, Schneeabräumung) problemlos umgesetzt werden können.

Eine besonders vorteilhafte Ausgestaltung, die einen hohen Reinigungseffekt gewährleistet, zeichnet sich dadurch aus, dass die erste Leitungseinrichtung oberhalb im vorderen Stirnbereich der Reinigungseinrichtung endet, so dass der Bürsteneinheit von oben her Reinipngsmittel-/Spülmittel zugeführt wird.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Detailperspektiv- und Schnittdarstellung einer Reinigungsvorrichtung mit einer Reinigungseinrichtung mit Bürsteneinheiten, einer verlängerbaren Gestängeeinrichtung, einem Reinigungsbehälter und einer ersten Leitungseinrichtung zur Beaufschlagung der Reinigungseinrichtung mit Reinigungsmittel,
- Fig. 2: schematische Ansicht der Reinigungseinrichtung gemäß Fig.1,
- Fig. 3: schematische Untersicht auf die Reinigungseinrichtung gemäß Fig. 1 und 2,
- Fig. 4: schematische Seitenansicht eines Adapters zum Anschluss weiterer Reinigungsgeräte und
- Fig. 5a, b: schematische Darstellung des Einsatzes der Reinigungsvorrichtung gemäß Fig.1 zur Reinigung einer Solaranlage eines Gebäudes vor dem Reinigungsvorgang (Fig. 5a) und während des Reinigungsvorgangs (Fig. 5b).

### WEGE ZUM AUSFÜHREN DER ERFINDUNG

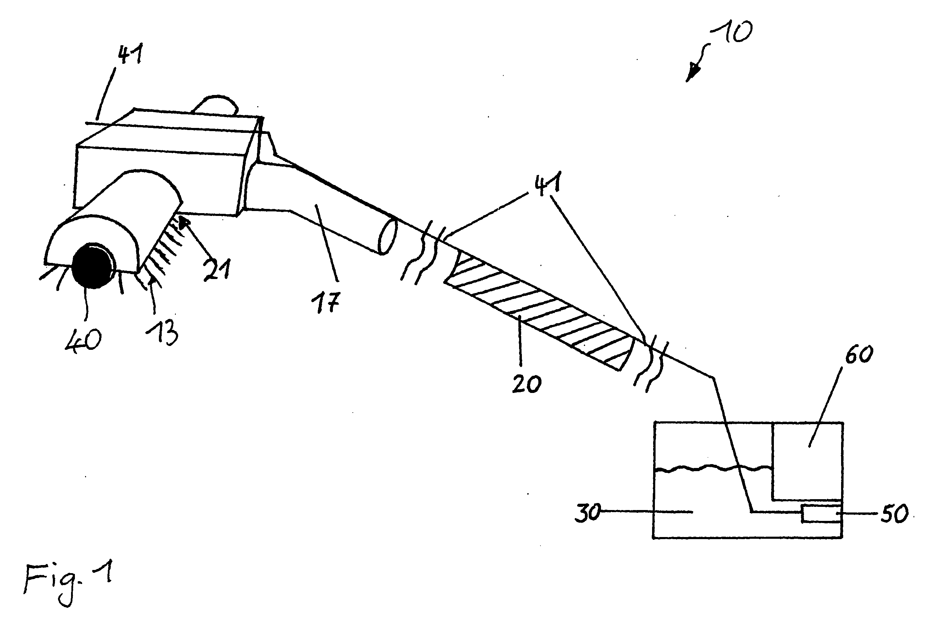

Fig. 1 zeigt schematisch den Aufbau eines Ausführungsbeispiels einer Reinigungsvorrichtung 10 für Photovoltaik-, Solaranlagen und Dachflächen. Die Reinigungsvorrichtung 10 weist eine Reinigungseinrichtung 21 auf, an die über ein Gestängeendstück 17 eine Gestängeeinrichtung 20 angeschlossen ist, wobei die Gestängeeinrichtung 20 in ihrer Länge variierbar ist. Dies wird beispielsweise dadurch möglich, dass die Gestängeeinrichtung 20 aus mehreren lösbar aufeinander steckbaren oder schraubbaren Gestängeeinheiten besteht oder die Gestängeeinrichtung 20 selbst als teleskopierbare Einheit ausgebildet ist. Diese konstruktive Ausgestaltung der Verlängerungsmöglichkeit der Gestängeeinrichtung 20 ist in Fig. 1 nicht näher dargestellt. Es können auch einzelne ineinander steckbare Gestängeeinheiten zur Erstellung der gewünschten Länge verwendet werden.

Gemäß Fig. 1 besitzt die Reinigungsvorrichtung 10 weiterhin ein Reinigungsmittelbehältnis 30 in dem Reinigungsflüssigkeit eingefüllt ist. Das Reinigungsmittelbehältnis 30 beziehungsweise die in dem Reinigungsmittelbehältnis befindliche Reinigungsflüssigkeit wird über eine erste Leitungseinrichtung 41, die beispielsweise als flexible Schlaucheinheit ausgebildet sein kann, der Reinigungseinrichtung 21 zugeführt. Hierbei ist die erste Leitungseinrichtung 41 über in Fig. 1 nicht näher dargestellte Führungsmuffen lösbar an der Gestängeeinrichtung 20 angeschlossen.

Innerhalb des Reinigungsmittelbehältnisses 30 wird die erste Leitungseinrichtung 41 von einer Pumpeinheit 50 beaufschlagt, wobei die Pumpeinheit 50 über einen in einer Kammer des Reinigungsmittelbehältnisses 30 vorhandenen zweiten Akkumulator 60 mit elektrischer Energie versorgt wird. Des Weiteren ist im Bereich des Reinigungsmittelbehältnisses 30 noch ein in Fig.1 nicht dargestellter Schalter zum Ein- beziehungsweise Ausschalten der Pumpeinheit 50 vorhanden.

Mittels der Pumpeinheit 50 ist es somit möglich, den Bereich der Reinigungseinrichtung 21 mit Reinigungsflüssigkeit und/oder Spülflüssigkeit zu versorgen.

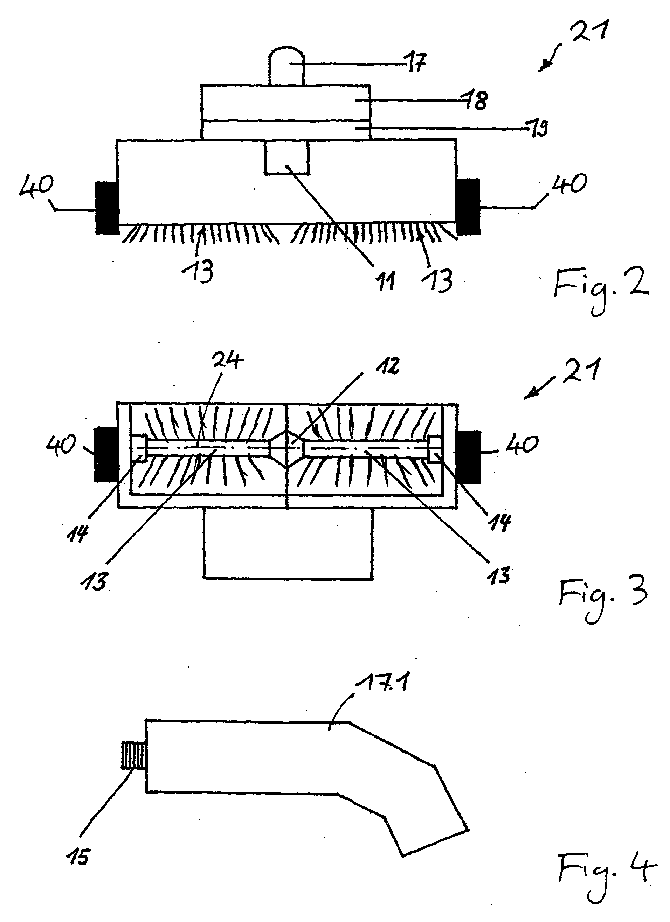

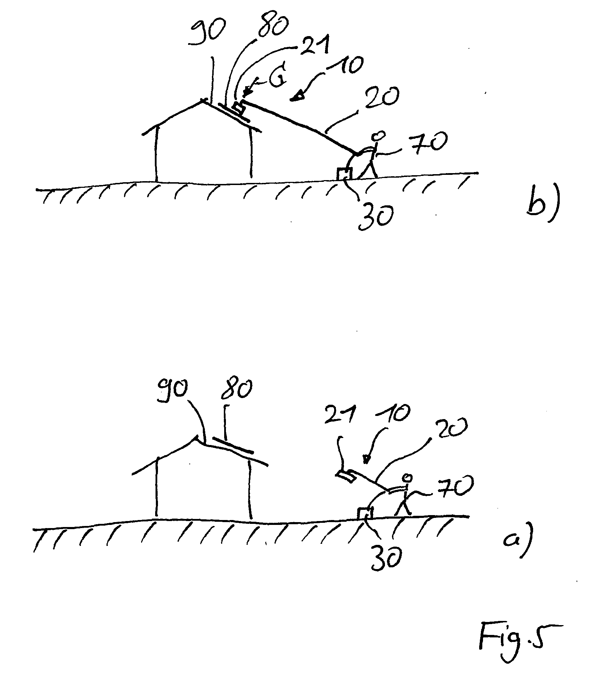

Die Reinigungseinrichtung 21 ist in den Fig. 2 und 3 schematisch näher dargestellt. Die Reinigungseinrichtung weist ein nach unten offenes Behältnis auf, an welchem außenseitig eine Fernsteuerung 19, ein erster Akkumulator 18 und das Gestängeendstück 17 angeschlossen sind. Innerhalb des Behältnisses der Reinigungseinrichtung 21 ist ein erstes Aggregat 11 vorhanden, das als Elektromotor ausgebildet ist. Über die Fernsteuerung 19, die von einer Bedienperson angesteuert werden kann, wird mittels des Akkumulators 18 das erste Aggregat 11 mit elektrischer Energie versorgt. Das erste Aggregat 11 ist an ein Getriebe 12 (siehe Fig. 3) angeschlossen, wobei zu beiden Seiten des Getriebes 12 Bürsteneinheiten 13 angeschlossen sind, die als Längsbürsten ausgebildet sind. Die Bürsteneinheiten 13 sind um Ihre Längsachse 24 drehbar gelagert und in ihrem äußeren Endbereich über Kugellager 14 an dem Behältnis der Reinigungseinrichtung 21 gelagert. Die Drehbewegung des ersten Aggregats 11 wird somit über das Getriebe 12 auf die Drehachse 24 der Bürsteneinheiten 13 umgesetzt. Während des Reinigungsbetriebs werden die Bürsteneinheiten 13 in Rotation versetzt und gleichzeitig wird über die erste Leitungseinheit 41 unter Beaufschlagung der Pumpeinheit 50 Reinigungsflüssigkeit und eventuell später Spülflüssigkeit in den Bereich der Reinigungseinrichtung 21 gebracht. Die Kugellager 14 sorgen für eine effiziente Laufleistung der Bürsteneinheiten 13. Weiterhin sind in Verlängerung der Längsachen der Bürsteneinheiten 13 außenseitig an dem Behältnis der Reinigungseinrichtung 21 schwenkbare Räder 40 angebracht, um die Beweglichkeit der Reinigungseinrichtung 21 während des Reinigungsvorgangs auf dem Dach zu erleichtern. Die Borsten der Bürsteneinheit 13 weisen gegenüber dem Außenumfangsmaß der Räder 40 einen vorgebbaren Überstand auf. Durch das Eigengewicht der Vorrichtung 10 wird über die Reinigungseinrichtung 21 Druck (Pfeil G in Fig. 5b) auf die zu reinigenden Flächen ausgeübt, der die Reinigungswirkung verbessert.

Zur Anpassung an verschiedene Verschmutzungsgrade beziehungsweise Reinigungsaufgaben (zum Beispiel Schneeräumung) ist die Bürsteneinheit 13 lösbar an der Reinigungseinrichtung 21 vorhanden.

Die gesamte Reinigungseinrichtung 21 wird über das abgewinkelte Gestängeendstück 17 an die verlängerbare Gestängeeinrichtung 20 angekoppelt.

In einem bevorzugten Ausführungsbeispiel besteht die verlängerbare Gestängeeinrichtung 20 aus Aluminium- oder Karbonstangen, beispielsweise mit einer Länge von 1 bis 2 m, einem Durchmesser von 15 cm und einer Wanddicke von 0,1 cm. Diese sind in ihrem Endbereich jeweils ineinander steckbar oder miteinander verschraubbar. An den Aluminiumstangen sind in den Figuren nicht näher dargestellte Führungsmuffen für unterschiedliche Leitungseinrichtungen beziehungsweise Schläuche angebracht. Benötigt werden diese Muffen für die erste Leitungseinrichtung 41, über die das Reinigungsmittel aus dem Reinigungsmittelbehälter 30 zugeführt wird. Es ist möglich, Spülwasser über ein separates Behältnis mit einer separaten Pumpeinheit zuzuführen.

Die Reinigungseinrichtung 21 selbst kann mit ihrem Gewindeendstück 17 von der Gestängeeinrichtung 20 abgezogen werden und auf die Gestängeeinrichtung 20 ein Adapter 17.1 gemäß Fig. 4 aufgesteckt werden, der in seinem einen Endbereich ein handelsübliches Gewinde 15 aufweist, an das weitere Reinigungsgeräte wie beispielsweise Besen oder Trockengummi oder dergleichen angeschlossen werden können, die ohne Beaufschlagung von Reinigungsflüssigkeit oder elektrischer Energie eingesetzt werden können. Dies ist beispielsweise zur Beseitigung von Schnee vorteilhaft.

Mit der erfindungsgemäßen Reinigungsvorrichtung 10 können aufgrund der Längenverstellbarkeit der Gestängeeinrichtung und gewählter Gewichtsverteilung problemlos Dachflächen 90 mit Photovoltaik- oder Solaranlagen (80) zu Reinigungszwecken mit einer einzigen Bedienperson 70 erreicht werden, ohne das Hebebühnen oder zusätzliches weiteres Reinigungspersonal benötigt wird (siehe Fig. 5a und 5b). Allein durch das Eigengewicht der Reinigungsvorrichtung 10 wird im Bereich der Reinigungseinrichtung 21 ein Auflagedruck erzeugt, der eine intensive Reinigung durch die rotierende Brüsteneinheit 13 gewährleistet. Eine aufwendige Unterdruckerzeugung wie im Stand der Technik kann daher vollständig entfallen.

## Patentansprüche

1. Reinigungsvorrichtung (10) geeignet für Photovoltaik-, Solaranlagen oder Dachflächen mit
- einer Reinigungseinrichtung (21) mit zumindest einer um eine Achse (24) drehbar antreibbare Bürsteneinheit (13),
- einer an die Reinigungseinrichtung (21) lösbar angeschlossenen Gestängeeinrichtung (20), die in ihrer jeweiligen Länge einstellbar ist und
- einer ersten Leitungseinrichtung (41), über die der Reinigungseinrichtung (21) Reinigungs- oder Spülflüssigkeit zuführbar ist,
- wobei
- die Bürsteneinheit (13) über ein in der Reinigungseinrichtung (21) angeordnetes erstes Aggregat (11), nämlich Elektromotor, antreibbar ist,
- das erste Aggregat (11) über eine Fernsteuerung (19) ansteuerbar ist,
- die Bürsteneinheit (13) als zumindest eine um eine Längsachse (24) rotierbare Längsbürste ausgebildet ist und
- zwischen dem ersten Aggregat (11) und der Bürsteneinheit (13) ein Getriebe (12) angeordnet ist,
- die Achse (24) der Bürsteneinheit (13) im Wesentlichen rechtwinklig zur Längsrichtung der Gestängeeinrichtung (20) verläuft,
- die erste Leitungseinrichtung (41) mit einem Reinigungsmittelbehälter oder Spülwasserbehälter (30) in Kommunikationsverbindung steht, der eine Pumpeinheit (50) aufweist,
- die Pumpeinheit (50) als elektrische Pumpeinheit ausgebildet ist,
- links und rechts des Getriebes (12) jeweils eine Längsbürste angeschlossen ist,
- die Bürsteneinheit lösbar an der Reinigungseinrichtung vorhanden ist,
- **dadurch gekennzeichnet, dass**
- das erste Aggregat (11) über einen in der Reinigungsein-richtung (21) angeordneten ersten Akkumulator mit elektrischer Energie versorgt wird,
- die Reinigungseinrichtung (21) auf Rollen oder Rädern (40) gelagert ist,
und die Gestängeeinrichtung (20) aus hochfestem leichtem Material, wie bespielsweise Aluminium oder Karbon besteht.

2. Reinigungsvorrichtung nach Anspruch 1,
- **dadurch gekennzeichnet, dass**
- die Gestängeeinrichtung (20) aus mehreren, lösbar miteinander verbundenen Gestängeeinheiten besteht.

3. Reinigungsvorrichtung nach Anspruch 2,
- **dadurch gekennzeichnet, dass**
- die Gestängeeinheiten lösbar mittels Rastverbindungen miteinander verbindbar sind.

4. Reinigungsvorrichtung nach Anspruch 1,
- **dadurch gekennzeichnet, dass**
- die erste Leitungseinrichtung als flexible Schlaucheinrichtung ausgebildet sind.

5. Reinigungsvorrichtung nach einem der vorstehenden Ansprüche,
- **dadurch gekennzeichnet, dass**
- die erste Leitungseinrichtung lösbar an der Gestängeeinrichtung (20) anschließbar sind.

6. Reinigungsvorrichtung nach Anspruch 1,
- **dadurch gekennzeichnet, dass**
- die Gestängeeinrichtung (20) Führungsmuffen zum lösbaren Anschluss der ersten Leitungseinrichtung aufweist.

7. Reinigungsvorrichtung nach einem oder mehreren der vorstehenden Ansprüche,
- **dadurch gekennzeichnet, dass**
- die Reinigungseinrichtung (21) gegen einen Adapter, an den insbesondere zum Entfernen von Schnee geeignete Geräte schließbar sind, über ein Klick-, Rast- oder Gewindesystem austauschbar ist.

8. Reinigungsvorrichtung nach einem oder mehreren der vorstehenden Ansprüche,
- **dadurch gekennzeichnet, dass**
- an der Reinigungseinrichtung eine an einen Monitor angeschlossene Kamera angeordnet ist.

9. Reinigungsvorrichtung nach Anspruch 1,
- **dadurch gekennzeichnet, dass**
- die maximale Länge der Gestängeeinrichtung (20) im Bereich zwischen 5 bis 30 m liegt.

10. Reinigungsvorrichtung nach einem oder mehreren der vorstehenden Ansprüche,
- **dadurch gekennzeichnet, dass**
- die erste Leitungseinrichtung (41) oberhalb der Bürsteneinheit (13) der Reinigungseinrichtung (21) endet.

11. Reinigungsvorrichtung nach Anspruch 2,
- **dadurch gekennzeichnet, dass**
- die Gestängeeinheiten lösbar mittels Schraubverbindungen miteinander verbunden sind.

12. Reinigungsvorrichtung nach Anspruch 1,
- **dadurch gekennzeichnet, dass**
- die Pumpeinheit über einen zweiten Akkumulator (60) mit elektrischer Energie versorgbar ist.

13. Reinigungsvorrichtung nach Anspruch 1,
- **dadurch gekennzeichnet, dass**
- die Pumpeinheit über eine an ein Stromnetz angeschlossene Leitung mit elektrischer Energie versorgbar ist.

## Claims

1. Cleaning apparatus (10) which is suitable for photovoltaic systems, solar systems or roof areas, having
- a cleaning device (21) with at least one brush unit (13) which can be driven such that it can rotate about an axis (24),
- a rod device (20) which is connected to the cleaning device (21) in a detachable manner, it being possible to adjust the respective length of the said rod device, and
- a first line device (41), it being possible to supply cleaning or rinsing liquid to the cleaning device (21) via the said first line device,
- wherein
- the brush unit (13) can be driven by means of a first assembly (11), specifically an electric motor, which is arranged in the cleaning device (21),
- the first assembly (11) can be actuated by means of a remote control means (19),
- the brush unit (13) is in the form of at least one longitudinal brush which can rotate about a longitudinal axis (24), and
- a gear mechanism (12) is arranged between the first assembly (11) and the brush unit (13),
- the axis (24) of the brush unit (13) runs substantially perpendicular to the longitudinal direction of the rod device (20),
- the first line device (41) forms a communication connection with a cleaning agent container or rinsing water container (30), the said cleaning agent container or rinsing water container having a pump unit (50),
- the pump unit (50) is in the form of an electric pump unit,
- a respective longitudinal brush is connected to the left and to the right of the gear mechanism (12),
- the brush unit is provided on the cleaning device in a detachable manner,
- **characterized in that**
- the first assembly (11) is supplied with electrical energy by means of a first rechargeable battery which is arranged in the cleaning device (21),
- the cleaning device (21) is mounted on rollers or wheels (40),
- and the rod device (20) is composed of a high-strength, lightweight material, for example aluminium or carbon.

2. Cleaning apparatus according to Claim 1,
- **characterized in that**
- the rod device (20) comprises a plurality of rod units which are connected to one another in a detachable manner.

3. Cleaning apparatus according to Claim 2,
- **characterized in that**
- the rod units can be connected to one another in a detachable manner by means of latching connections.

4. Cleaning apparatus according to Claim 1,
- **characterized in that**
- the first line device is in the form of a flexible hose device.

5. Cleaning apparatus according to one of the preceding claims,
- **characterized in that**
- the first line device can be connected to the rod device (20) in a detachable manner.

6. Cleaning apparatus according to Claim 1,
- **characterized in that**
- the rod device (20) has guide sleeves for detachable connection of the first line device.

7. Cleaning apparatus according to one or more of the preceding claims,
- **characterized in that**
- the cleaning device (21) can be replaced by an adapter to which, in particular, devices which are suitable for clearing snow can be connected by means of a snap-action, latching or thread system.

8. Cleaning apparatus according to one or more of the preceding claims,
- **characterized in that**
- a camera, which is connected to a monitor, is arranged on the cleaning device.

9. Cleaning apparatus according to Claim 1,
- **characterized in that**
- the maximum length of the rod device (20) is in the range of between 5 and 30 m.

10. Cleaning apparatus according to one or more of the preceding claims,
- **characterized in that**
- the first line device (41) ends above the brush unit (13) of the cleaning device (21).

11. Cleaning apparatus according to Claim 2,
- **characterized in that**
- the rod units are connected to one another in a detachable manner by means of screw connections.

12. Cleaning apparatus according to Claim 1,
- **characterized in that**
- the pump unit can be supplied with electrical energy by means of a second rechargeable battery (60).

13. Cleaning apparatus according to Claim 1,
- **characterized in that**
- the pump unit can be supplied with electrical energy by means of a line which is connected to a power supply system.

## Revendications

1. Dispositif de nettoyage (10) convenant pour les installations solaires photovoltaïques ou les surfaces de toiture, comportant
- un moyen de nettoyage (21) comprenant au moins une unité de brossage (13) pouvant être entraînée en rotation autour d'un axe (24),
- un moyen de liaison (20) relié de manière amovible au moyen de nettoyage (21), dont la longueur est réglable et
- un premier moyen de canalisation (41) par lequel un liquide de nettoyage ou de rinçage peut être amené au moyen de nettoyage (21),
- dans lequel
- l'unité de brossage (13) peut être entraînée par un premier organe (11), à savoir un moteur électrique, disposé dans le moyen de nettoyage (21),
- le premier organe (11) peut être commandé par une télécommande (19),
- l'unité de brossage (13) est réalisée sous la forme d'au moins une brosse longitudinale pouvant tourner autour d'un axe longitudinal (24) et
- un réducteur (12) est disposé entre le premier organe (11) et l'unité de brossage (13),
- l'axe (24) de l'unité de brossage (13) s'étend essentiellement perpendiculairement à la direction longitudinale du moyen de liaison (20),
- le premier moyen de canalisation (41) est en communication avec un réservoir de produit de nettoyage ou un réservoir d'eau de rinçage (30) qui présente une unité de pompage (50),
- l'unité de pompage (50) est réalisée sous la forme d'une unité de pompage électrique,
- une brosse longitudinale est raccordée à gauche et une autre à droite du réducteur (12),
- l'unité de brossage (13) est présente de manière amovible sur le moyen de nettoyage,
- **caractérisé en ce que**
- le premier organe (11) est alimenté en énergie électrique par un premier accumulateur disposé dans le moyen de nettoyage (21),
- le moyen de nettoyage (21) est monté sur roulettes ou roues (40) et
- le moyen de liaison (20) est réalisé dans un matériau léger à haute résistance, comme par exemple en aluminium ou carbone.

2. Dispositif de nettoyage selon la revendication 1,
- **caractérisé en ce que**
- le moyen de liaison (20) est composé de plusieurs unités de liaison reliées entre elles de manière amovible.

3. Dispositif de nettoyage selon la revendication 2,
- **caractérisé en ce que**
- les unités de liaison peuvent être reliées entre elles au moyen d'assemblages par enclenchement.

4. Dispositif de nettoyage selon la revendication 1,
- **caractérisé en ce que**
- le premier moyen de canalisation est réalisé sous la forme d'un tuyau flexible.

5. Dispositif de nettoyage selon une des revendications précédentes,
- **caractérisé en ce que**
- le premier moyen de canalisation peut être raccordé de manière amovible au moyen de liaison (20).

6. Dispositif de nettoyage selon la revendication 1,
- **caractérisé en ce que**
- le moyen de liaison (20) présente des manchons de guidage pour le raccordement amovible du premier moyen de canalisation.

7. Dispositif de nettoyage selon une ou plusieurs des revendications précédentes,
- **caractérisé en ce que**
- le moyen de nettoyage (21) peut être remplacé par un adaptateur auquel des appareils, convenant en particulier pour enlever la neige, peuvent être raccordés par un système à déclic, à enclenchement ou à filetage.

8. Dispositif de nettoyage selon une ou plusieurs des revendications précédentes,
- **caractérisé en ce que**
- une caméra raccordée à un écran est disposée sur le moyen de nettoyage.

9. Dispositif de nettoyage selon la revendication 1,
- **caractérisé en ce que**
- la longueur maximale du moyen de liaison (20) est comprise entre 5 et 30 m.

10. Dispositif de nettoyage selon une ou plusieurs des revendications précédentes,
- **caractérisé en ce que**
- le premier moyen de canalisation (41) se termine au-dessus de l'unité de brossage (13) du moyen de nettoyage (21).

11. Dispositif de nettoyage selon la revendication 2,
- **caractérisé en ce que**
- les unités de liaison sont reliées entre elles de manière amovible au moyen de liaisons vissées.

12. Dispositif de nettoyage selon la revendication 1,
- **caractérisé en ce que**
- l'unité de pompage peut être alimentée en énergie électrique par un deuxième accumulateur (60).

13. Dispositif de nettoyage selon la revendication 1,
- **caractérisé en ce que**
- l'unité de pompage peut être alimentée en énergie électrique par un câble raccordé à un réseau électrique.
